# EUROPÄISCHE PATENTANMELDUNG

(11) **EP 1 675 241 A1**
(43) Veröffentlichungstag der Anmeldung: **28.06.2006**
(21) Anmeldenummer: 04030602.9
(22) Anmeldetag: 23.12.2004
(51) Int. Cl.: H02G 3/22, G02B 6/44

(54) **Fluiddichte Leitungsdurchführung**

(71) Anmelder: MAN Turbomaschinen AG Schweiz, 8005 Zürich (CH)
(72) Erfinder: Suter, Roger, 8050 Zürich (CH); Kleynhans, George, 8180 Bülach (CH); Ortmann, Peter, 8200 Schaffhausen (CH)
(74) Vertreter: Dr. Graf & Partner

(57) **Zusammenfassung**

Die fluiddichte Leitungsdurchführung (1) zum Zuführen eines Leiters (2) in einen druckbeaufschlagbaren Raum (3) umfasst ein Gehäuse (4), zumindest einen Leiter (2) sowie eine erste und eine zweite druckbelastbare Dichtung (5a,5b), wobei die zwei druckbelastbaren Dichtungen (5a,5b) und das Gehäuse (4) einen Innenhohlraum (4d) begrenzen, wobei der Leiter (2) über die erste Dichtung (5a) in den Innenhohlraum (4d) eintritt, durch den Innenhohlraum (4d) verläuft, und über die zweite Dichtung (5b) aus dem Innenhohlraum (4d) austritt, und wobei der Innenhohlraum (4d) eine Druckentlastungsöffnung (4c) aufweist, welche in einen Aussenraum (6) mündet, der sich ausserhalb des druckbeaufschlagbaren Raumes (3) befindet.

## Beschreibung

Die Erfindung betrifft eine fluiddichte Leitungsdurchführung gemäss dem Oberbegriff von Anspruch 1.

Es ist bekannt, elektrische Leitungen durch die Wand eines Druckbehälters zu führen, um beispielsweise innerhalb des Druckbehälters angeordnete Antriebsmittel von aussen mit elektrischer Energie zu versorgen, oder um beispielsweise mit Hilfe von Überwachungs-, Steuer- oder Regelleitungen einen Datenaustausch zu den im Innern des Druckbehälters angeordneten Sensoren und Aktuatoren zu ermöglichen. So kann beispielsweise bei einem Turbokompressor der gesamte Kompressor sowie die Antriebsvorrichtung innerhalb eines Druckbehälters angeordnet sein. Zur Energieversorgung, sowie zur Ansteuerung und Überwachung des Turbokompressors und des Motors ist eine Vielzahl von durch die Wand des Druckbehälters verlaufenden Leitungen erforderlich, insbesondere wenn die rotierenden Teile mit Hilfe von Magnetlagern berührungslos gelagert sind.

Nachteilig an bekannten Leitungsdurchführungen, welche bei unter Druck stehenden Gehäusen verwendet werden, ist die Tatsache, dass bei den Leitungsdurchführungen eine Leckage auftreten kann, sodass beispielsweise Gas unkontrolliert nach Aussen strömt.

Gefährlich wird dies insbesondere, wenn in gewissen Anlageteilen unbemerkt ein Druckaufbau erfolg und diese unter einem unerwartet hohen Druck stehen, oder wenn als Folge des Gasaustrittes eine Explosionsgefahr entsteht.

Es ist Aufgabe der vorliegenden Erfindung eine sichere und kostengünstige Leitungsdurchführung vorzuschlagen, welche für druckbeaufschlagbare Räume geeignet ist.

Diese Aufgabe wird gelöst mit einer fluiddichten Leitungsdurchführung aufweisend die Merkmale von Anspruch 1. Die Unteransprüche 2 bis 14 betreffen weitere, vorteilhafte Ausgestaltungen.

Die Aufgabe wird insbesondere gelöst mit einer fluiddichten Leitungsdurchführung zum Zuführen eines Leiters in einen druckbeaufschlagbaren Raum, wobei die Leitungsdurchführung ein Gehäuse, zumindest einen Leiter sowie eine erste und eine zweite druckbelastbare Dichtung umfasst, wobei die zwei druckbelastbaren Dichtungen und das Gehäuse einen Innenhohlraum begrenzen, wobei der Leiter über die erste Dichtung in den Innenhohlraum eintritt, durch den Innenhohlraum verläuft, und über die zweite Dichtung aus dem Innenhohlraum austritt, und wobei der Innenhohlraum eine Druckentlastungsöffnung aufweist, welche in einen Aussenraum mündet, der sich ausserhalb des druckbeaufschlagbaren Raumes befindet.

Die erfindungsgemässe Leitungsdurchführung weist den Vorteil auf, dass bei einer Leckage einer Dichtung die aus dem druckbeaufschlagbaren Raum durch die Dichtung strömenden Gase in den Innenhohlraum der Leitungsdurchführung fliessen und von diesem Innenhohlraum über die Druckentlastungsöffnung kontrolliert in einen Aussenraum abgegeben werden. Dadurch ist einerseits sichergestellt, dass das in die Leitungsdurchführung einströmende Leckagegas keinen unkontrollierten Druckaufbau in der Leitungsdurchführung bewirkt. Andererseits ist sichergestellt, dass das einströmende Leckagegas kontrolliert einem definierten Aussenraum zugeführt wird. Durch diese kontrollierte Abführung des Gases bleibt die gesamte Leitungsdurchführung fluiddicht. Zudem ist eine Explosionsgefahr ausgeschlossen.

Die Leitung in der Leitungsdurchführung ist vorzugsweise als elektrischer Leiter, insbesondere als stabförmiger elektrischer Leiter ausgestaltet. Der Leiter kann jedoch auch als Lichtwellenleiter ausgestaltet sein.

In einer bevorzugten Ausführungsform ist die Leitungsdurchführung als Steckverbindung ausgestaltet, umfassend ein erstes und zweites Gehäuseteil mit je einem Leiter, welche im eingesteckten Zustand miteinander verbunden sind, insbesondere elektrisch leitend verbunden sind. Die Steckverbindung kann beispielsweise einen einzigen Leiter, oder auch eine Mehrzahl sich gegenseitig verbindender Leiter aufweisen. Die Leiter können beispielsweise zur Übertragung von Steuersignalen im Bereich von mV bis V oder mA ausgelegt sein. Die Leiter könnten auch zur Energieversorgung, beispielsweise von innerhalb des Gehäuses angeordneten Motoren, ausgelegt sein, und somit zur Übertragung von Strömen und/oder Spannungen im Bereich von kA und kV ausgelegt sein. Die erfindungsgemässe fluid- bzw. gasdichte Leitungsdurchführung ist insbesondere für Anwendungsgebiete mit Differenzdrücke im Bereich zwischen 5 Bar und 500 Bar geeignet.
Die erfindungsgemässe Leitungsdurchführung ist beispielsweise in Kombination mit Turbokompressoren, insbesondere mit magnetgelagerten Turbokompressoren, geeignet, bei welchen der gesamte elektrische Antriebsmotor sowie alle Kompressorstufen in einem gemeinsamen Druckgehäuse angeordnet sind. Bei einem derartigen Turbokompressor sind eine Mehrzahl von Energie- und Steuerleitungen mit Leitungsdurchführungen durch das Druckgehäuse zu leiten. Für einen langfristigen, wartungsarmen und sicheren Betrieb eines derartigen Turbokompressors sind die erfindungsgemässen Leitungsdurchführungen besonders geeignet.

Die Erfindung wird nachfolgend mit Hilfe von Figuren an Hand unterschiedlicher Ausführungsbeispiele beschrieben. Es zeigen:
- Fig. 1: einen Längsschnitt durch eine Leitungsdurchführung;
- Fig. 2: einen Längsschnitt durch ein zweites Ausführungsbeispiel einer Leitungsdurchführung;
- Fig. 3: eine Ansicht aus Richtung A auf eine mehrpolige, als Steckverbindung ausgestalteten Leitungsdurchführung;
- Fig. 4: einen Längsschnitt durch ein drittes Ausführungsbeispiel einer Leitungsdurchführung;
- Fig. 5: einen Schnitt (B-B) durch ein weiteres Ausführungsbeispiel einer Leitungsdurchführung;
- Fig. 6: schematisch einen Druckbehälter mit einer Leitungsdurchführung;
- Fig. 7: schematisch einen Druckbehälter mit einer weiteren Leitungsdurchführung.

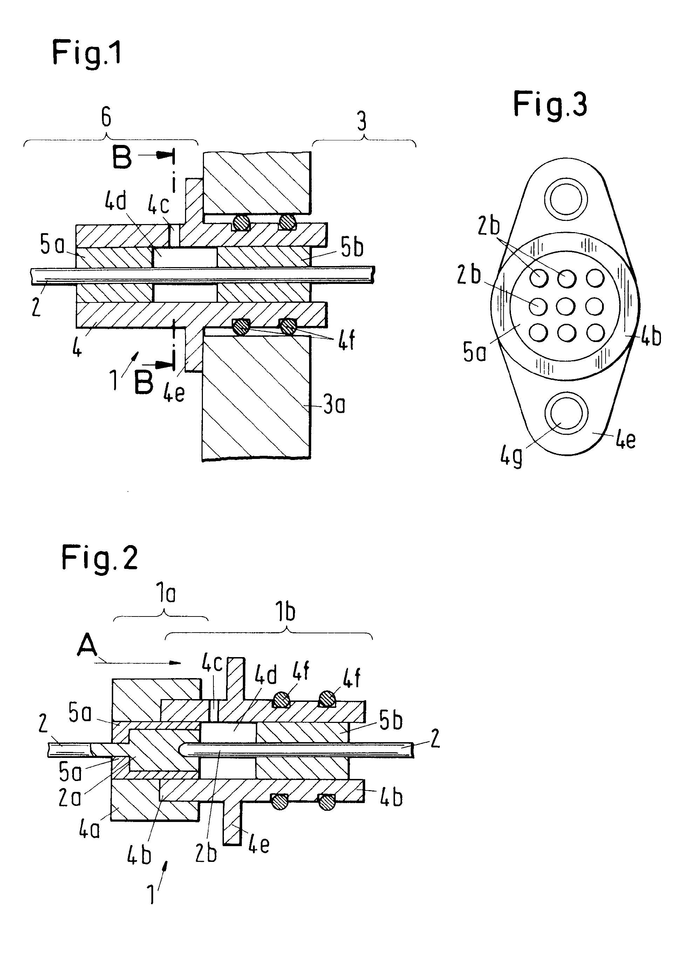

Figur 1 zeigt eine einstückig ausgestaltete Leitungsdurchführung 1 umfassend ein Gehäuse 4 mit Befestigungsflansch 4e, Innenraum 4d und Druckentlastungsöffnung 4c. Die Leitungsdurchführung 1 umfasst zudem einen elektrischen Leiter 2, sowie eine erste und zweite Dichtung 5a, 5b, durch welche der Leiter 2 verläuft. Die zweite Dichtung 5b wird nachfolgend auch als primäre Dichtung oder Hauptdichtung bezeichnet. Die erste Dichtung 5a wird nachfolgend auch als sekundäre Dichtung bezeichnet. Diese zwei Dichtungen 5a, 5b sind derart angeordnet, dass sie gemeinsam mit der Wand des Gehäuses 4 einen Innenhohlraum 4d begrenzen, welcher als einzige Öffnung eine durch die Gehäusewand verlaufende Druckentlastungsöffnung 4c aufweist. Im dargestellten Ausführungsbeispiel ist der Leiter 2 als metallischer Stab ausgestaltet. In diesem Ausführungsbeispiel bestehen die zwei Dichtungen 5a, 5b aus einem elektrisch isolierenden Material wie Kunststoff oder Keramik. Der Leiter 2 könnte beispielsweise auch aus einem Lichtwellenleiter aus Glasfaser bestehen. Die zwei Dichtungen 5a, 5b könnten dabei auch aus einem elektrisch leitenden Material, beispielsweise aus Metall bestehen. Diese Dichtungen bilden gleichzeitig eine Druckbarriere.

Zumindest die Dichtung 5b ist druckbelastbar ausgestaltet und muss den zwischen dem Innenraum 3 und dem Innenhohlraum 4d anliegenden Differenzdruck aushalten. In einer bevorzugten Ausführungsform entspricht der Druck im Innenhohlraum 4d ungefähr einem Bar. Der Druck im Innenholraum 4d kann, abhängig von der durch die zweite Dichtung 5b strömenden Leckagemenge, Werte bis zum Druckniveau des Innenraums 3 annehmen. Daher ist die erste druckbelastbare Dichtung 5a vorzugsweise derart ausgestaltet, dass diese in der Lage ist den Druck des Innenraumes 3 aufzunehmen. Der Druck im Innenraum 3 kann, je nach Anwendung, bis zu 500 Bar betragen. Wird die Dichtung 5b aus irgendwelchen Gründen undicht, so dringt das Fluid, vorzugsweise Gas, aus dem Innenraum 3 in den Innenhohlraum 4d, und wird danach über die Öffnung 4c entsorgt. Das aus der Öffnung 4c austretende Gas wird vorzugweise nicht dem Aussenraum 6 zugeleitet sondern in die Atmosphäre geleitet, sodass auch bei undichter Dichtung 5b eine fluiddichte Leitungsdurchführung 1 zwischen dem Innenraum 3 und dem Aussenraum 6 besteht.

Die Leitungsdurchführung 1 wird vorzugsweise in Kombination mit einem Druckgehäuse 3a verwendet. Figur 1 zeigt schematisch eine Druckgehäuse 3a mit druckbeaufschlagbarem Innenraum 3, wobei das Druckgehäuse 3a eine kreisförmige Durchbrechung aufweist, in welcher die zylinderförmige Leitungsdurchführung 1 angeordnet ist. Zwei Dichtungsringe 4f dichten den Spalt zwischen Druckgehäusewand 3a und Gehäuse 4 ab, sodass der Leiter 2 fluiddicht, insbesondere gasdicht vom Innenraum 3 in den sich ausserhalb des Druckgehäuses befindlichen Aussenraum 6 geführt ist. Weiterhin kann das Gehäuse 4 durch schweissen oder löten am Druckgehäuse 3a zu befestigen.

Figur 2 zeigt in einem Längsschnitt eine weitere Leitungsdurchführung 1, welche im Unterschied zu der in Figur 1 dargstellten Ausführungsform als Steckverbindung ausgestaltet ist. Die Steckverbindung umfasst ein erstes Steckverbindungsteil 1a und ein zweites Steckverbindungsteil 1b, welche gegenseitig lösbar sind. Das zweite Steckverbindungsteil 1b mit zweiten Gehäuseteil 4b wird beispielsweise über den Flansch 4e, wie in Figur 1 dargestellt, fest mit dem Druckgehäuse 3a verbunden. Das erste Steckverbindungsteil 1a umfasst einen weiblichen Leiterverbinder 2a, welcher über eine erste Dichtung 5a mit dem ersten Gehäuseteil 4a verbunden ist. Im Innenhohlraum 4d ist ein männlicher Leiterverbinder 2b angeordnet, wobei diese beiden Leiterverbinder 2a, 2b beziehungsweise die beiden Gehäuseteile 4a,4b steckbar verbindbar sind. Zwischen den beiden Gehäuseteilen 4a, 4b können weitere, nicht dargestellte Befestigungselemente wie Gewinde oder Sicherungselemente angeordnet sein, um eine feste Verbindung der beiden Gehäuseteile 4a, 4b zusätzlich zu gewährleisten.

Die in Figur 2 dargestellte Steckverbindung 1 weist eine Druckentlastungsöffnung 4c auf, sodass sich, falls die druckbelastbare Dichtung 5b geringfügig undicht wird, im Innenhohlraum 4d kein unkontrollierter Druck aufbauen kann. Sollte die zweite druckbelastbare Dichtung 5b eine grosse Leckage aufweisen, so baut sich, insbesondere bei kleiner Druckentlastungsöffnung 4c, im Innenhohlraum 4d ein Druck auf, sodass es in diesem Fall besonders wichtig ist, dass die erste Dichtung 5a möglichst bis zu dem im Innenraum 3 anliegenden Druck belastbar ist.

Die Leitungsdurchführung 1 kann, wie in Figur 2 dargestellt, zur Durchführung eines einzigen Leiters 2 ausgestaltet sein.

Figur 3 zeigt in einer Ansicht aus Richtung A, in Figur 2 dargestellt, ein zweites Gehäuseteil 4b mit insgesamt neun metallischen, männlichen Leiterverbindern 2b, welche in einer elektrisch isolierenden Dichtung 5b angeordnet und gehalten sind. Das zweite Gehäuseteil 4b ist mit Hilfe eines Flanschs 4e mit Bohrungen 4g an der Aussenwand des Druckgehäuses 3a befestigbar. Die Leitungsdurchführung 1, wie in Figur 2 als Steckverbindung ausgestaltet oder wie in Figur 1 als Durchführung ausgestaltet, kann einen oder bei entsprechender Ausgestaltung eine beliebige Vielzahl von Leitern 2 aufweisen.

Grundsätzlich kann jede drucktragende Leitungsdurchführung 1 versagen, mit der Folge einer unter Umständen unkontrollierten Gasleckage.

Das primäre drucktragende Dichtungselement 5b ist bei einer Steckverbindung im nicht beweglichen Steckverbindungsteil 1b fest am Druckbehälter 3a montiert. Jedes Dichtungselement 5b kann eine oder eine Vielzahl von Leiterdurchführungen aufweisen. Das bewegliche Steckverbindungsteil 1a ist mit einem Kabel verbunden, welches einen oder eine Vielzahl von Leitern 2 beziehungsweise Strängen aufweisen kann, welche aus einer Vielzahl von Litzen bestehen können. Der unbewegliche und der bewegliche Teil der Steckverbindung 1a, 1b sind im Betriebszustand fest und dicht miteinander verbunden und bilden ein umschlossenes Volumen 4d in ihrem Inneren.

Die erfindungsgemässe Leitungsdurchführung vermeidet, dass, sollte das primäre drucktragende Dichtungselement 5b versagen, im umschlossenen Volumen 4d der Steckverbindung 1a, 1b ein Druckaufbau stattfinden. Dieser Druckaufbau würde ansonst dazu führen, dass insbesondere bei unsachgemässem Zusammenbau des beweglichen Teils der Steckverbindung 1b Gas entlang der Leiterlitzen durch das Kabel in nicht entsprechend zertifizierte Zonen migrieren kann. Um diese Sekundärleckage zu vermeiden, ist der bewegliche Teil des Steckers 1a mit einer zweiten drucktragenden Barriere 5a ausgerüstet. Die Leiterdurchführungen in den Steckverbindungsteilen 2a, 2b sind vorzugsweise aus massiven Stäben ausgebildet, insbesondere um die bei der Verwendung von Litzendraht als Leiter 2 mögliche Leckage zu vermeiden.

Das Versagen der primären Dichtung 5b kann unterschiedliche Verläufe annehmen. Einerseits ist, bedingt durch beispielsweise Temperaturschwankungen und damit verbundenen inneren Spannungen, ein schleichender Verlust der Dichtfunktion denkbar. Andererseits kann beispielsweise durch Einwirkung äusserer mechanischer Kräfte eine unmittelbare Zerstörung der Dichtfunktion erfolgen. Im ersteren Fall bestimmt, aber auch im zweiten Fall ist dank der Druckentlastungsöffnung gewährleistet, dass die Fehlfunktion des drucktragenden Dichtungselements 5b zu keinem übermässigen Druckaufbau im inneren Volumen der Steckverbindung 4d führt. Insbesondere bei kleinem steckerinternen Volumen 4d würde sich ansonst in kurzer Zeit der Druck des eigentlichen Druckbehälters einstellen, unter der Voraussetzung, dass das Gehäuse 4 der Steckverbindung dem internen Druck standhalten kann.

Die erfindungsgemässe Leitungsdurchführung 1, insbesondere ausgestaltet als Steckverbindung, umfasst ein interne Volumen 4d, welches fluidtechnisch einen Auslass aufweist und insbesondere an die Umgebung angeschlossen ist. Hierdurch ist sichergestellt, dass das innere Volumen der Steckverbindung bei defektem Dichtelement 5b nicht permanent druckbeaufschlagt bleibt. In Abhängigkeit der Öffnungsgrösse zur Umgebung und der Leckage des primären Dichtungselements 5b wird sich jedoch im innern Volumen 4d ein entsprechender Druck einstellen. Diese Leckage kann mittels Sensoren, beispielsweise einem Drucksensor oder Gasdetektor, überwacht werden und gegebenenfalls auch ein Alarm ausgelöst werden.

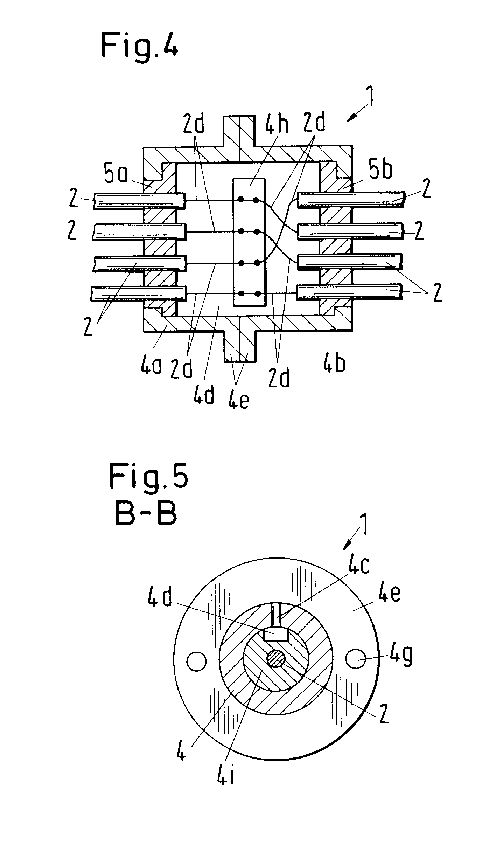

Figur 4 zeigt schematisch ein Gehäuse 4, welches aus zwei miteinander gasdicht verschraubten Gehäuseteilen 4a, 4b besteht. Jedes Gehäuseteil 4a, 4b umfasst eine Dichtung 5a, 5b, durch welche je vier starre Leiter 2 verlaufen. Innerhalb des Gehäuses 4 sind die starren Leiter 2 mit flexiblen Leiter 2d verbunden. Innerhalb des Gehäuses 4 ist eine Verbindungsvorrichtung 4h angeordnet, um die flexiblen Leiter 2d zu verbinden oder falls erforderlich auch wieder zu trennen. In einer bevorzugten Ausgestaltung sind die flexiblen Leiter 2d aus Litzendraht gefertigt, und die Verbindungsvorrichtung 4h ist als Klemmschiene ausgestaltet, sodass die flexiblen Leiter 2d mit Hilfe von Schrauben an der Verbindungsvorrichtung 4h befestigbar sind, und zudem zwischen vorzugsweise je zwei Leiter 2d ein gegenseitiger elektrischer Kontakt gebildet wird. Die Leiter 2d könnten jedoch beispielsweise auch als Lichtwellenleiter ausgestaltet sein.

Figur 5 zeigt mit einem Schnitt entlang der in Figur 1 dargestellten Linie B-B ein weiteres Ausführungsbeispiel einer Leitungsdurchführung 1. Der in Figur 1 dargestellte Innenhohlraum 4d ist im Ausführungsbeispiel gemäss Figur 5 teilweise mit einem Isolator 4i gefüllt, sodass sich der Innenhohlraum 4d wie in Figur 5 dargestellt verkleinert. Der Innenhohlraum 4d gewährleistet eine Fluid leitende Verbindung entlang des Raumes zwischen der ersten und zweiten Dichtung 5a, 5b sowie der Druckentlastungsöffnung 4c. Isolator 4i ist als elektrischer Isolator ausgestaltet und kann auf unterschiedlichste Weise mit Innenhohlräumen 4d zum Leiten des Fluides versehen sein. Der Isolator 4i besteht vorzugsweise aus einem Festkörper. Als Isolator 4i könnte jedoch auch eine Flüssigkeit verwendet werden, beispielsweise Oel, welche den Innenhohlraum 4d teilweise füllt.

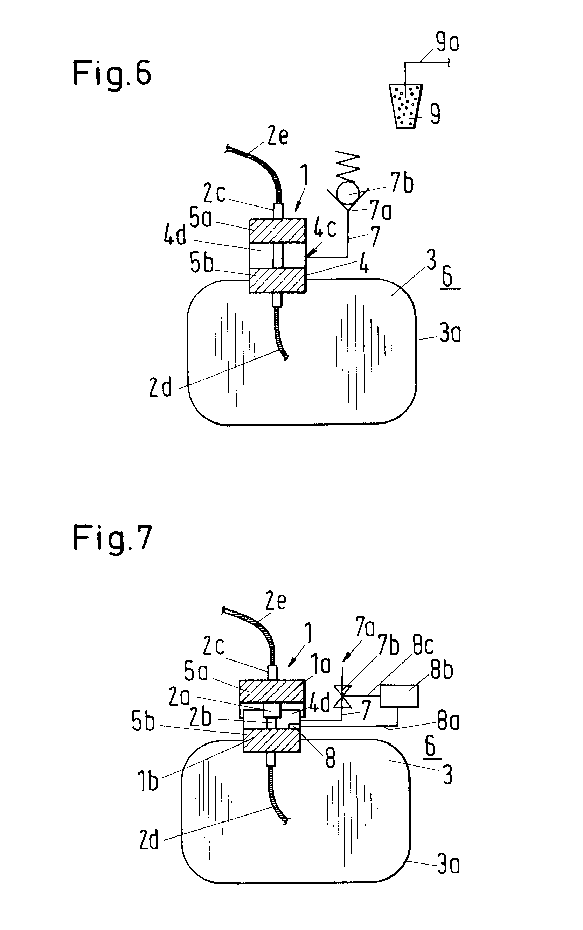

Figur 6 zeigt schematisch ein Druckgehäuse 3a mit druckbeaufschlagbarem Innenraum 3, wobei am Druckgehäuse 3a eine Leitungsdurchführung 1 angeordnet ist, welche einen elektrischen Leiter 2 fluid- beziehungsweise gasdicht vom Innenraum 3 zum Aussenraum 6 führt. Der durch die druckbelastbaren Dichtungen 5a, 5b begrenzte Innenhohlraum 4d ist über die Druckentlastungsöffnung 4c und die Leitung 7 fluidleitend mit dem Ventil 7b mit Austrittsöffnung 7a verbunden. Das Ventil 7b weist eine Feder auf, wobei das Druckniveau, bei welchem das Ventil 7b öffnet, vorzugsweise durch die Federkraft einstellbar ist. Im Aussenraum 6 ist ein Gassensor 9 mit elektrischer Leitung 9a angeordnet. Der Gassensor 9 ist in der Lage das aus dem Ventil 7b austretende Gas zu erkennen. Im dargestellten Ausführungsbeispiel sind die Leiter 2d, 2e als flexible, metallische Leiter ausgestaltet, beispielsweise als Litzenleiter. Diese Leiter 2d, 2e sind mit dem stabförmigen, metallischen Leiter 2 elektrisch leitend verbunden.

Das Druckgehäuse 3a könnte als Druckgehäuse eines Turbokompressors, umfassend einen Turboverdichter sowie einen Elektromotor, ausgestaltet sein. Die fluidleitenden Ein- und Austritte des Turbokompressors sind nicht dargestellt. Zur Energieversorgung des Elektromotors wären eine Mehrzahl der in Figur 1 dargestellten Leitungsdurchführungen 1 am Druckgehäuse 3a anzuordnen, um den Elektromotor mit einer Energie von beispielsweise 1 Megawatt zu versorgen. Zur Ansteuerung oder Regelung des Turbokompressors wären zudem eine Mehrzahl von Leitungen erforderlich, welche Signale im Bereich bis zu wenigen Volt übertragen. Derartige Steuerleitungen könnten, wie beispielsweise in Figur 3 dargestellt, über eine als Steckverbindung ausgestaltete Leitungsdurchführung 1 umfassend eine Mehrzahl individueller Leiter 2b zugeführt sein.

Figur 7 zeigt schematisch wiederum ein Druckgehäuse 3a mit druckbeaufschlagbarem Raum 3, wobei die Leitungsdurchführung 1 als Steckverbindung mit erstem und zweiten Steckverbindungsteil 1a, 1b ausgestaltet ist. Im Innenhohlraum 4d der Leitungsdurchführung 1 ist ein Sensor 8 angeordnet. Dieser Sensor 8 kann aber auch ausserhalb der Steckverbindung 1 angeordnet sein, beispielsweise in dem der Sensor 8 über eine Fluid leitende Verbindung mit dem im Innenhohlraum 4d anliegenden Druck verbunden ist. Der Sensor 8 könnte auch in einer Impulsleitung ausserhalb des Steckers, auf einem speziell dafür vorgesehenem Rack angeordnet sein. Die Druckentlastungsöffnung 4c ist über ein Ventil 7b mit der Austrittsöffnung 7a verbunden. Eine Überwachungsvorrichtung 8b erfasst den Wert des Sensors 8, beispielsweise ein Drucksensor oder ein Gasfühler, über die elektrische Leitung 8a, und regelt das Ventil 7b über die elektrische Leitung 8c. Das Ventil 7b wird beispielsweise beim Überschreiten eines vorgebbaren, im Innenhohlraum 4d anstehenden Druckes geöffnet. Die Leitungsdurchführung 1 kann als StarkstromSteckverbindung ausgestaltet sein, und zur Übertragung von elektrischer Energie im Beriech von kA und kV ausgelegt sein. Die Leitungsdurchführung 1 kann jedoch auch eine oder eine Vielzahl von Steckverbindungen aufweisen, und zur Übertragung von elektrischen Signalen im Beriech von mV bis V oder mA bis A ausgelegt sein. Die erimdungsgemässen Leitungsdurchführungen 1 können in unterschiedlichsten Formen gebaut werden. Insbesondere bei deren Ausgestaltung als Steckverbindung kann das zweite Steckverbindungsteil 1b auch derart ausgestaltet sein, dass ein handelsübliches, normiertes erstes Steckverbindungsteil 1a einführbar ist. Die in Figur 7 dargestellte Steckverbindung weist vorzugsweise einen nicht dargestellten Dichtungsring auf, welcher den Spalt zwischen dem ersten und zweiten Steckverbindungsteil 1a,1b abdichtet, damit der Innenhohlraum 4d bezüglich dem Aussenraum 6 dicht ist.

Die in den Figuren 1 und 2 dargestellte Leitungsdurchführung 1 ist vorzugsweise als Einbauteil ausgestaltet, welches an einem Druckgehäuse 3a befestigt wird. Die Leitungsdurchführung 1 kann auf unterschiedliche Weise mit dem Druckgehäuse 3a verbunden werden, so auch durch Schweissen, chemisches Schweissen oder Löten. Das Gehäuse 4 der Leitungsdurchführung 1 kann beispielsweise aus Metall oder Kunststoff bestehen. Beispielsweise kann auch das erste Steckverbindungsteil 1a aus Metall und das zweite Steckverbindungsteil 1b aus einem anderen Material wie Kunststoff bestehen.

## Patentansprüche

1. Fluiddichte Leitungsdurchführung (1) zum Zuführen eines Leiters (2) in einen druckbeaufschlagbaren Raum (3), umfassend ein Gehäuse (4), zumindest einen Leiter (2) sowie eine erste und eine zweite druckbelastbare Dichtung (5a, 5b), wobei die zwei druckbelastbaren Dichtungen (5a, 5b) und das Gehäuse (4) einen Innenhohlraum (4d) begrenzen, wobei der Leiter (2) über die erste Dichtung (5a) in den Innenhohlraum (4d) eintritt, durch den Innenhohlraum (4d) verläuft, und über die zweite Dichtung (5b) aus dem Innenhohlraum (4d) austritt, und wobei der Innenhohlraum (4d) eine Druckentlastungsöffnung (4c) aufweist, welche in einen Aussenraum (6) mündet, der sich ausserhalb des druckbeaufschlagbaren Raumes (3) befindet.

2. Leitungsdurchführung nach Anspruch 1, **dadurch gekennzeichnet, dass** diese als Steckverbindung ausgestaltet ist, wobei das Gehäuse (4) ein erstes und zweites Gehäuseteil (4a, 4b) umfasst, welche lösbar verbindbar sind, und wobei der Leiter (2) ein erstes Verbindungsteil (2a) und ein zweites Verbindungsteil (2b) umfasst, welche derart ausgestaltet und angeordnet sind, dass die Steckverbindung im zusammengesteckten Zustand innerhalb des Gehäuses (4) eine leitende Verbindung zwischen dem ersten und zweiten Verbindungsteil (2a, 2b) aufweist.

3. Leitungsdurchführung nach Anspruch 1, **dadurch gekennzeichnet, dass** innerhalb des Gehäuses (4) eine Verbindungsvorrichtung (4h) angeordnet ist, welche den Leiter (2) zu verbinden und/oder zu trennen erlaubt.

4. Leitungsdurchführung nach Anspruch 3, **dadurch gekennzeichnet, dass** der Leiter (2) innerhalb des Gehäuses (4) flexible ausgestaltet ist.

5. Leitungsdurchführung nach einem der Ansprüche 3 bis 4, **dadurch gekennzeichnet, dass** die Verbindungsvorrichtung (4h) derart ausgestaltet ist, dass eine Mehrzahl von Leitern (2) gegenseitig verbindbar sind.

6. Leitungsdurchführung nach einem der vorhergehenden Ansprüche, **dadurch gekennzeichnet, dass** der Leiter (2) ein elektrischer Leiter ist, und die erste und zweite Dichtung (5a, 5b) einen elektrischen Isolator umfasst, durch welchen der Leiter (2) verläuft.

7. Leitungsdurchführung nach Anspruch 6, **dadurch gekennzeichnet, dass** der Leiter (2) aus Metall besteht.

8. Leitungsdurchführung nach Anspruch 6 oder 7, **dadurch gekennzeichnet, dass** der Leiter (2) stabförmig ausgestaltet ist.

9. Leitungsdurchführung nach einem der vorhergehenden Ansprüche, **dadurch gekennzeichnet, dass** ein Sensor (8) derart angeordnet ist, dass dieser zumindest den im Innenhohlraum (4a) anliegenden Druck überwachen kann.

10. Leitungsdurchführung nach einem der vorhergehenden Ansprüche, **dadurch gekennzeichnet, dass** die Druckentlastungsöffnung (4b) Fluid leitend mit einem Ventil (7) verbunden ist, und dass das Ventil (7) Fluid leitend mit einer Austrittsöffnung (7a) verbunden ist, welche in den Aussenraum (6) mündet.

11. Leitungsdurchführung nach Anspruch 10, **dadurch gekennzeichnet, dass** das Ventil (7) ansteuerbar ist.

12. Leitungsdurchführung nach einem der Ansprüche 2 bis 11, **dadurch gekennzeichnet, dass** diese eine Mehrzahl von verbindbaren Leitern (2) aufweist.

13. Leitungsdurchführung nach einem der vorhergehenden Ansprüche, **dadurch gekennzeichnet, dass** der Leiter (2) aus einem Lichtwellenleiter besteht oder einen Lichtwellenleiter umfasst.

14. Leitungsdurchführung nach einem der vorhergehenden Ansprüche, **dadurch gekennzeichnet, dass** der Innenhohlraum (4d) teilweise mit einem flüssigen oder festen Isolator (4i) ausgefüllt ist.

15. Druckbeaufschlagbare Vorrichtung umfassend eine Leitungsdurchführung nach einem der vorhergehenden Ansprüche.
